(19) **Europäisches Patentamt**

**European Patent Office**

**Office européen des brevets**

(11)  **EP 1 233 840 B1**

(12)  **EUROPÄISCHE PATENTSCHRIFT**

(45) Veröffentlichungstag und Bekanntmachung des Hinweises auf die Patenterteilung:
**02.06.2004   Patentblatt 2004/23**

(51) Int Cl.⁷: $B23F\ 1/06$, B23F 21/14

(21) Anmeldenummer: **00914011.2**

(22) Anmeldetag: **12.04.2000**

(86) Internationale Anmeldenummer:
**PCT/CH2000/000213**

(87) Internationale Veröffentlichungsnummer:
**WO 2001/039916 (07.06.2001 Gazette 2001/23)**

(54) **FORMSCHNEIDVERFAHREN FÜR GERADVERZAHNTE KEGELRÄDER**

METHOD FOR GRINDING STRAIGHT TOOTHED CONICAL GEAR WHEELS

PROCEDE DE RECTIFICATION POUR ROUES CONIQUES A DENTURE DROITE

(84) Benannte Vertragsstaaten:
**AT BE CH CY DE DK ES FI FR GB GR IE IT LI LU MC NL PT SE**

(30) Priorität: **01.12.1999   CH 219399**

(43) Veröffentlichungstag der Anmeldung:
**28.08.2002   Patentblatt 2002/35**

(73) Patentinhaber: **Lambert AG**
**2553 Safnern (CH)**

(72) Erfinder:
- **SIMON, Walter**
  **CH-2552 Orpund (CH)**
- **MOERI, Peter**
  **CH-2553 Safnern (CH)**

(74) Vertreter: **Saam, Christophe**
**Patents & Technology Surveys SA**
**Terreaux 7**
**Case Postale 2848**
**2001 Neuchâtel (CH)**

(56) Entgegenhaltungen:
| | |
|---|---|
| **DE-A- 2 139 844** | **DE-A- 4 112 122** |
| **DE-C- 104 582** | **DE-C- 4 122 459** |
| **GB-A- 1 420 641** | **GB-A- 186 602 010** |

- **A. GALASSINI: "Kegelräderschneidmaschinen ohne Schablone" WERKSTATTSTECHNIK, ZEITSCHRIFT FUR INDUSTRIELLE FERTIGUNG, 1913, Seiten 718-720, XP002145027 BERLIN DE**
- **A.K. THOMAS: "Zahnradherstellung, Teil 2: Kegelräder" , CARL HANSR VERLAG , 1966 XP002145029 Seite 30, Zeile 2 - Zeile 6 Absatz [03.1]**
- **"Berichte der Schriftleitung" WERKSTATTSTECHNIK., Nr. 5, - 1924 Seiten 156-167, XP002145028 SPRINGER VERLAG. BERLIN., DE ISSN: 0340-4544**

EP 1 233 840 B1

**Beschreibung**

Die vorliegende Erfindung betrifft ein Verfahren zur Herstellung von Kegelrädern, insbesondere ein Kegelradfräsverfahren und ein Kegelradschleifverfahren.

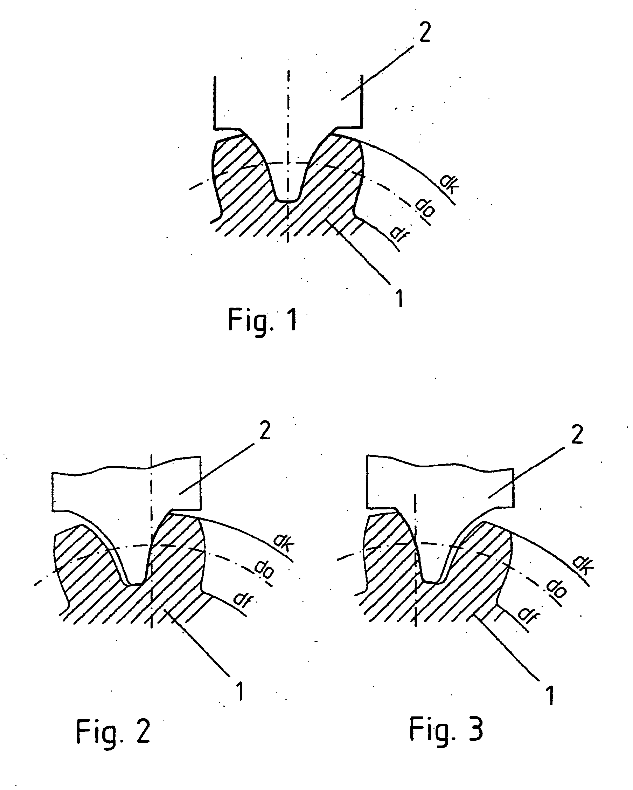

Die Figur 1 zeigt ein bekanntes Verfahren, um Kegelräder mit einem Einzahnfräser herzustellen. Bei diesem Verfahren werden zwei Zahnflanken durch den gleichen Fräserzahn gleichzeitig geschnitten. Das Rad oder der Fräser dreht sich dann um einen Winkel $\alpha$ gleich der Eingriffsteilung und die zwei nächsten Zahnflanken werden geschnitten.

Dieses Verfahren ist zwar schnell, gewährleistet aber keine gute Qualität der Tragfläche. Die mit diesem Verfahren hergestellten Kegelräder sind daher lärmend und kaum effizient.

Es wurde daher vorgeschlagen, jede Zahnflanke für sich mit einem angepassten Werkzeug zu fräsen. Ein entsprechendes bekanntes Verfahren, welches das richtige Zahnprofil sowohl beim Aussen- als auch beim Innendurchmesser erzeugt, ist auf den Figuren 2 und 3 dargestellt.

Dieses Verfahren verwendet zwei Werkzeuge, oder ein Werkzeug 2 mit zwei Schnittzähnen. Das erste Werkzeug (beziehungsweise der erste Zahn des Werkzeugs) fräst die linken Zahnflanken, während die rechten Zahnflanken vom zweiten Werkzeug bzw. Zahn gefräst werden. Entlang des Teilkegels werden alle Zahnflanken nacheinander angefertigt. Mit diesem Verfahren wurden schon Kegelräder im Gross- und im Kleinmodulbereich hergestellt.

Dieses Verfahren kann nur mit Sonderwälzfräsmaschinen eingesetzt werden, die eine Neigung $\delta_0$ der Fräserachse erlauben. Solche Maschinen sind jedoch langsam, kostspielig und kompliziert.

DE-C 104 582 beschreibt ein anderes Verfahren zum Bearbeiten von geradverzahnten Kegelrädern, in welchem die Zahnflanken mit einem Scheibenfräser gefräst werden. Dabei werden die linken Zahnflanken zu einer anderen Zeit als die rechten Zahnflanken gefräst; das Kegelrad wird zwischen dem Fräsvorgang der linken Zahnflanke und dem Fräsvorgang der rechten Zahnflanke gedreht.

Dieses Verfahren erlaubt zwar eine hohe Produktionsleistung. Mit diesem Formfräser können jedoch nicht alle theoretischen Evolenten zwischen dem Aussen- und dem Innen-Kegelraddurchmesser erzeugt werden. Die Qualität der Tragfläche der mit dieser Maschine erzeugten Kegelräder ist daher ungenügend für hohe Ansprüche.

Ein anderes Verfahren, welches erlaubt Kegelräder mit balligen Zahnflanken zu erzeugen, wurde im Patent DE-C1-4122459 beschrieben.

Es ist daher ein Ziel der Erfindung, ein neues und verbessertes Kegelradherstellungsverfahren anzubieten, insbesondere ein neues verbessertes Kegelradfräsverfahren und ein neues verbessertes Kegelradschleifverfahren.

Ein anderes Ziel ist, ein neues Kegelradfräsverfahren anzubieten, das auch mit kostengünstigen Fräsmaschinen eingesetzt werden kann, mit welchen die Fräserachse nicht geneigt werden kann.

Ein anderes Ziel ist, ein neues Kegelradfräsverfahren anzubieten, das schneller ist als bekannte Verfahren, ohne dass die Qualität der Tragfläche beeinträchtigt wird.

Ein anderes Ziel ist, neue Werkzeuge zur Durchführung des Verfahrens, insbesondere neue Fräser, neue Schleiferscheiben und neue Steuerungsprogramme, anzubieten.

Gemäss der vorliegenden Erfindung werden diese Ziele insbesondere durch die Merkmale der unabhängigen Ansprüche erreicht. Weitere vorteilhafte Ausführungsformen gehen ausserdem aus den abhängigen Ansprüchen und der Beschreibung hervor.

Insbesondere werden diese Ziele dadurch erreicht, dass jede Zahnflanke für sich mit einem Scheibenfräser gefräst wird. Jede Zahnflanke wird dem Teilkegel nach und korrekt ins Zentrum gefräst. Der Zahnfuss hat entlang des Teilkegels die gleiche Tiefe. Das bearbeitete Kegelrad wird zwischen dem Fräsvorgang mindestens einer linken Zahnflanke und dem Fräsvorgang mindestens einer rechten Zahnflanke um einen Winkel gedreht, welcher kein Vielfaches der Eingriffsteilung $\alpha$ ist. Die Neigung der Scheibenfräserachse bleibt während dem Fräsvorgang des benannten Rades unverändert.

Ein Vorteil der vorliegenden Erfindung ist, dass eine automatische Beschickung einer CNC-Maschine möglich ist, so dass eine Mehrmaschinen-Bedienung möglich ist.

Ein anderer Vorteil ist, dass eine hohe Produktionsleistung erreicht werden kann und dass die Scheibenfräser eine lange Standzeit haben.

Ein anderer Vorteil ist, dass die günstigste Zahnlänge gewählt werden kann.

Ein anderer Vorteil ist, dass das Tragbild längs- und höhenballig korrigiert werden kann, um auf diese Weise die günstigste Laufeigenschaft zu erhalten.

Im Folgenden werden anhand der beigefügten Zeichnungen bevorzugte Ausführungsbeispiele der Erfindung näher beschrieben. Es zeigen:

Die Figur 1 das Fräsverfahren gemäss einem bekannten Verfahren mit einem Einzahnfräser, der eine Steigung hat.

Die Figuren 2 und 3 das Fräsverfahren gemäss einem bekannten Verfahren mit einem eingängigen Zweizahnfräser oder mit einem ein- oder mehr-gängigen Vielzahnfräser, die eine Steigung $\gamma$ haben.

Die Figuren 4 und 5 das erfindungsgemässe Fräsverfahren mit einem erfindungsgemässen Scheibenfräser.

Die Figur 6 einen erfindungsgemässen Scheibenfräser.

Die Figur 7 einen Vergleich der Evolvente beim Innen- und beim Aussenkreis des Kegelrades.

Die Figur 8 einen Schnitt des hergestellten Kegelrades.

Die Figur 9 zwei Zähne des hergestellten Kegelrades.

Die Figuren 10 bis 12 die Drehbewegung $\Delta$C des Werkstückes und die axiale Verschiebung von $\pm$ $\Delta$Y/2 des Fräsers zwischen dem Fräsvorgang einer linken Zahnflanke und dem Fräsvorgang einer rechten Zahnflanke.

Die Figur 13 die notwendige Profilkorrektur (Evolvente), durch eine axiale Bewegung $\Delta Y_k$ und eine Drehbewegung $\Delta C_K$.

Die Figur 14 die notwendige Profilkorrektur (Evolvente) durch eine axiale Bewegung $\Delta X_k$.

Die Figur 15 in schematischer Weise einen längsballigen Zahn.

Die Figuren 16 und 17 in schematischer Weise die Effekte der Längsballigkeit auf das Tragbild.

Die Figur 18 in schematischer Weise einen höhenballigen Zahn.

Obwohl diese Beschreibung vor allem den Fräsvorgang eines Kegelrades beschreibt, wird der Fachmann verstehen, dass ähnliche Verfahrenschritte mit derselben Maschine auch für das Schleifen des Kegelrads nach dem Fräsen durchgeführt werden können.

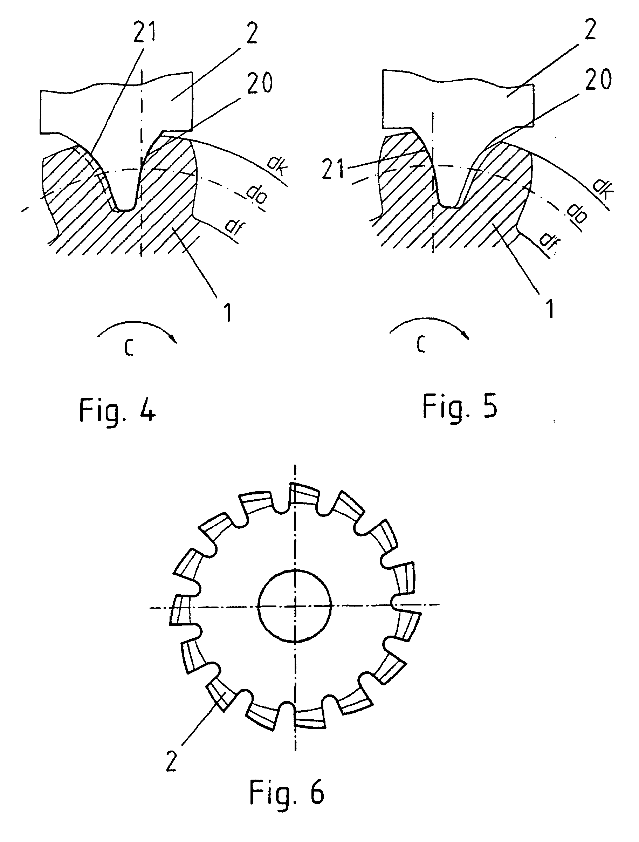

Das Prinzip des erfindungsgemässen Verfahrens ist, dass jede Zahnflanke für sich gefertigt wird, wie bei dem Verfahren der Figuren 2 und 3. Statt jedoch die Werkstückzähne mit zwei Werkzeugen oder mit einem vielzahnigen, beispielsweise zweizahnigen, Werkzeug zu fräsen, wird der auf der Figur 6 dargestellte erfindungsgemässe Scheibenfräser 2 verwendet.

In einer auf der Figur 4 dargestellten ersten Phase werden alle linken Flanken des Werkstücks nacheinander entlang des Teilkegels gefräst, wobei das Werkstück 1 jeweils um die Eingriffsteilung $\alpha$ (oder um ein vielfaches der Eingriffsteilung) gedreht wird (Drehung der C-Achse des Spindelstockes). Nachdem alle linken Flanken gefräst worden sind, wird das Werkstück um einen vordefinierten Winkel, welcher kein Vielfaches von $\alpha$ ist gedreht, um das Fräsen der rechten Flanken mit der anderen Seite des Scheibenfräsers 2 durchzuführen (Figur 5).

Der Fachmann wird verstehen, dass es auch möglich wäre, zuerst alle rechten Flanken zu fertigen und anschliessend die linken Flanken. Ebenso könnte man linke und rechte Flanken in jeder beliebiger Reihenfolge fräsen.

Mit diesem Verfahren hat der Zahnfuss entlang des Teilkegels eine konstante Tiefe; die Tragfläche und die Laufeigenschaften sind gut. Die Zahnlänge kann in Abhängigkeit des gewünschten Moduls gewählt werden. Es wurden beispielsweise Versuche mit einer Zahnlänge bis zu einem Viertel der Kegellänge gemacht.

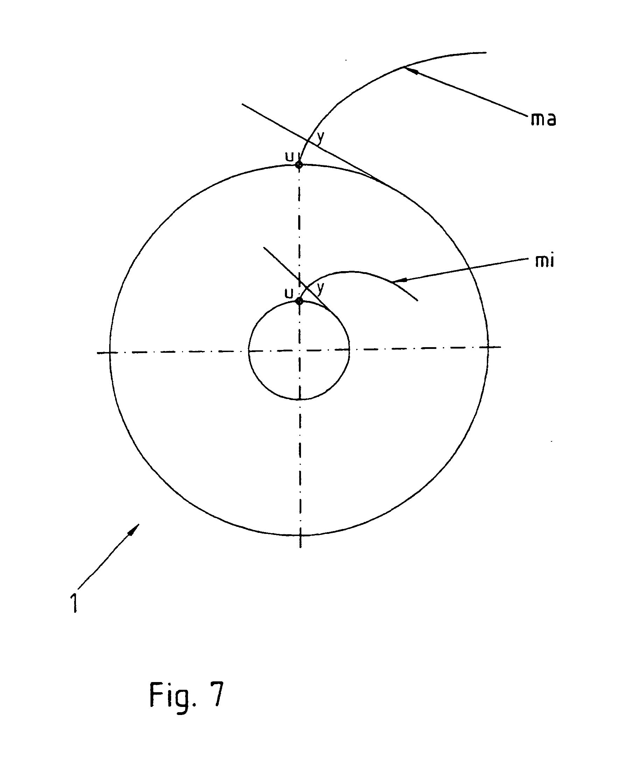

Es ist jedoch nicht möglich, mit einem Formfräser alle theoretischen Evolventen zwischen dem Aussen- und Innen-Kegelraddurchmesser zu erzeugen. Der Unterschied des Krümmungsradius der Evolvente beim inneren (kleinen) und äusseren (grossen) Grundkreisdurchmesser ist auf der Figur 7 dargestellt. Die Kurve $m_a$ zeigt die äussere Evolvente während die innere Evolvente mit der Kurve $m_i$ dargestellt wird.

Damit die günstigste Tragfläche und gute Eingriffsverhältnisse (in Abhängigkeit des Moduls) erreicht werden, muss der Profilwinkel verändert werden. Erfindungsgemäss wird diese Korrektur ohne Veränderung des Formfräsers 2 erreicht, sondern nur durch eine Winkelverschiebung des Kegelrades um die C-Achse und/ oder durch eine gleichzeitige Axialverschiebung des Scheibenfräsers um die Distanz $\Delta$Y entlang der Y-Achse erreicht.

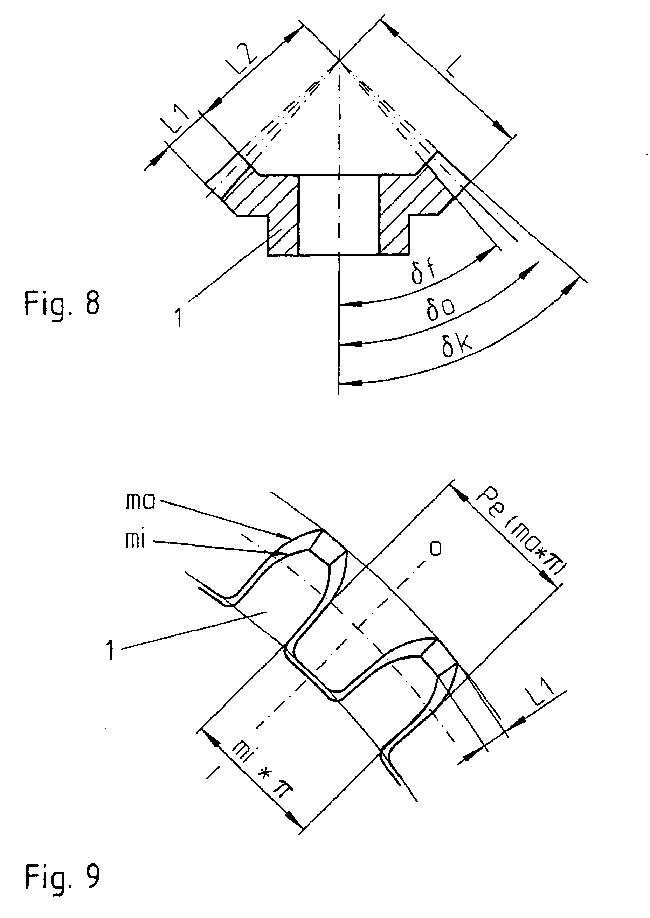

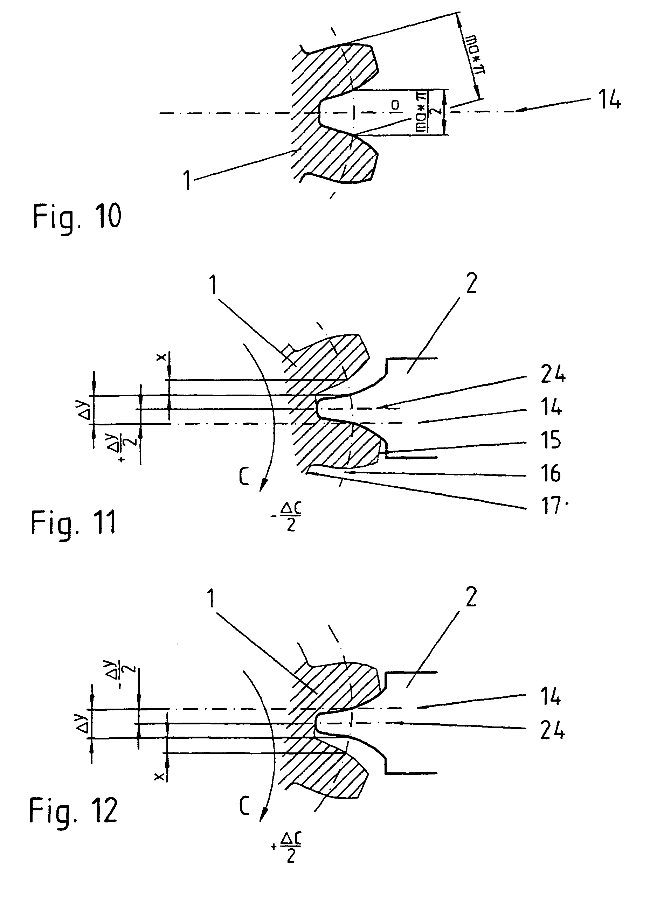

Die Figur 8 zeigt einen Schnitt des fertiggestellten Kegelrades 1, wovon zwei Zähne vergrössert auf den Figuren 9 und 10 dargestellt sind. Die Zahnlänge ist mit L1 gekennzeichnet während die Kegeltänge das Bezugszeichen L trägt. $\delta$f ist der Fusswinkel, $\delta$k der Kopfwinkel und $\delta_0$ der Teilwinkel. Das innere Modul ist $m_i$ und das äussere Modul $m_a$, während die Teilung Pe entspricht.

Die linken Flanken werden in einer Phase (Figur 11) mit der Werkstückachse in der Position 14 (Position 0) und mit der Scheibenfräserachse 24 in der axialen Position -$\Delta$Y/2 gefräst. Die Winkelposition des Werkstücks 1 beträgt k$\alpha$-$\Delta$C/2, wobei $\alpha$ die Eingriffsteilung und k eine beliebige ganze Zahl sind. Nach dem Fräsen jeder Zahnflanke wird das Werkstück um den Winkel $\alpha$ gedreht; der Scheibenfräser 2 bleibt in derselben axialen Position -$\Delta$Y/2.

Wenn alle linken Flanken gefräst worden sind, wird die Achse 24 des Scheibenfräsers 2 in der axialen Position +$\Delta$Y/2 verschoben. Die Werkstückachse 14 bleibt in der Position 0. Gleichzeitig wird das Werkstück um einen Winkel n$\alpha$+$\Delta$C gedreht (n beliebige ganze Zahl), um die rechten Zahnflanken zu bearbeiten. Der Winkel $\Delta$C entspricht vorzugsweise der Hälfte der Eingriffsteilung $\alpha$. Die Distanz $\Delta$Y ist vorzugsweise gleich der Fräserzahnbreite im Teilkreis $m_a$.

Wie man es unter anderem auf den Figuren 11 und 12 beobachten kann, ist die Breite des erfindungsgemässen Scheibenfräserzahnes im Teilkreis kleiner als die Hälfte der Eingriffsteilung $m_a$*$\pi$, so dass eine

Lücke x zwischen dem Fräserzahn und der nicht bearbeiten Werkstückzahnflanke entsteht. Das Modul des Scheibenfräsers entspricht dem Modul des Aussendurchmessers des Kegelrads 1; die Evolvente des Fräsers wird durch $m_a$ gegeben. Pro Modul ist ein bestimmter Scheibenfräser zu benutzen, vorzugsweise mit einem Bezugsprofil nach DIN867. Der Scheibenfräser kann beispielsweise aus HSS oder HM-Stahl hergestellt werden, wobei sich die Wahl nach dem zu fräsenden Werkstoff richtet.

Der Vorteil von diesem Verfahren ist, dass die Neigung der Scheibenfräserachse während dem Fräsvorgang unverändert bleibt; die Scheibenfräserachse bleibt beispielsweise senkrecht. Dieses Verfahren kann daher auch mit normalen Fräsmaschinen eingesetzt werden.

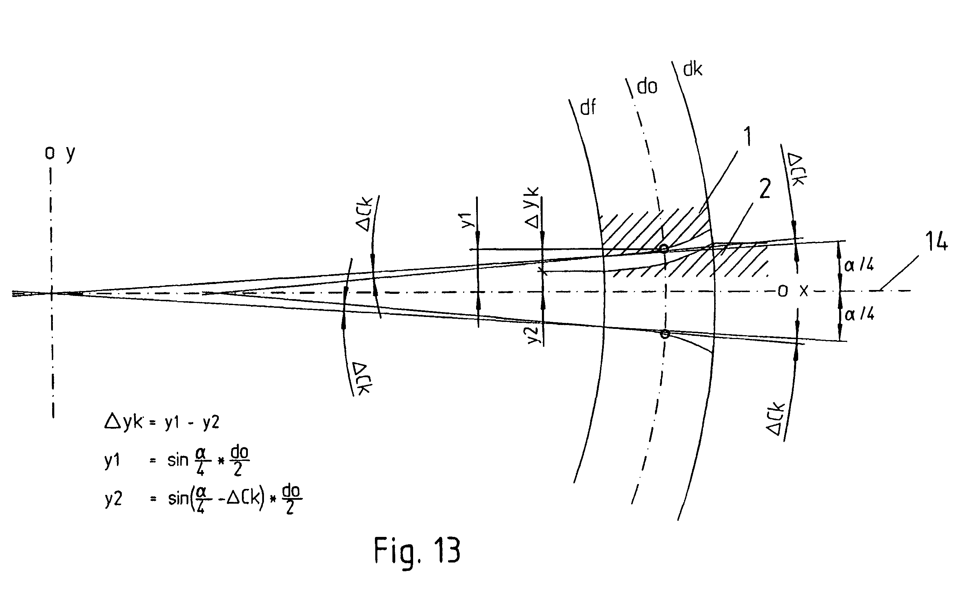

Um eine annähernd korrekte Evolvente auf der ganzen Zahnlänge zu gewährleisten, muss die Lage des Formfräsers 2 auf der Maschine korrigiert werden. Zu diesem Zweck wird eine zusätzliche axiale Bewegung $\Delta Y_K$ und eine zusätzliche Drehbewegung $\Delta C_K$ (beispielsweise um 1,5°) vorgenommen, wie auf der Figur 13 dargestellt.

Die axiale Bewegung $\Delta Y_K$ betrifft $y_1$-$y_2$, wobei

$$y1 = \sin \alpha/4 * d_0/2$$

und

$$y2 = \sin (\alpha/4 - \Delta C_K)* d_0/2$$

Die axiale Korrektur $\Delta Y_K$ kann somit ermittelt werden, sobald die benötigte Drehkorrektur $\Delta C_K$ gewählt worden ist.

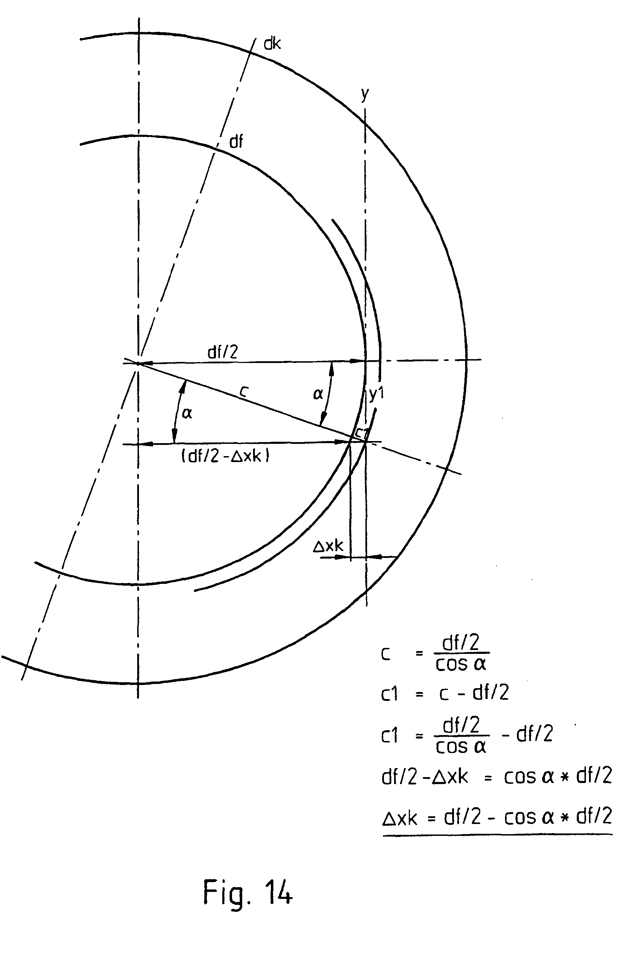

Um eine korrekte Evolvente zu gewährleisten, wird ausserdem in einer bevorzugten Variante eine kleine zusätzliche Bewegung $\Delta X_k$ der X-Achse durchgeführt, wie man es auf der Figur 14 sehen kann. Wenn der Diameter am Zahnfuss df beträgt, hat man:

$$df/2 - \Delta X_k = \cos\alpha * df/2,$$

so dass

$$\Delta X_k = df/2 - \cos\alpha * df/2$$

Bei mittleren und grösseren Geschwindigkeiten (Drehzahlen) werden manchmal während der Benutzung von Kegelrädern Laufgeräusche beobachtet. Die Ursachenkönnen unter anderem Einbaufehler infolge Verlagerungen der Getriebeachsen (Kantenträger) und schlechte Abrolleigenschaften im Bereich des Zahnkopfes sein.

Um dieses Problem zu lösen werden vorzugsweise die Zähne längsballig (breitenballig) und/oder höhenballig gefräst. Mit diesen Korrekturen der Profillage kann das Tragbild, das Laufgeräusch und die Standzeit des belasteten Zahnes optimiert werden.

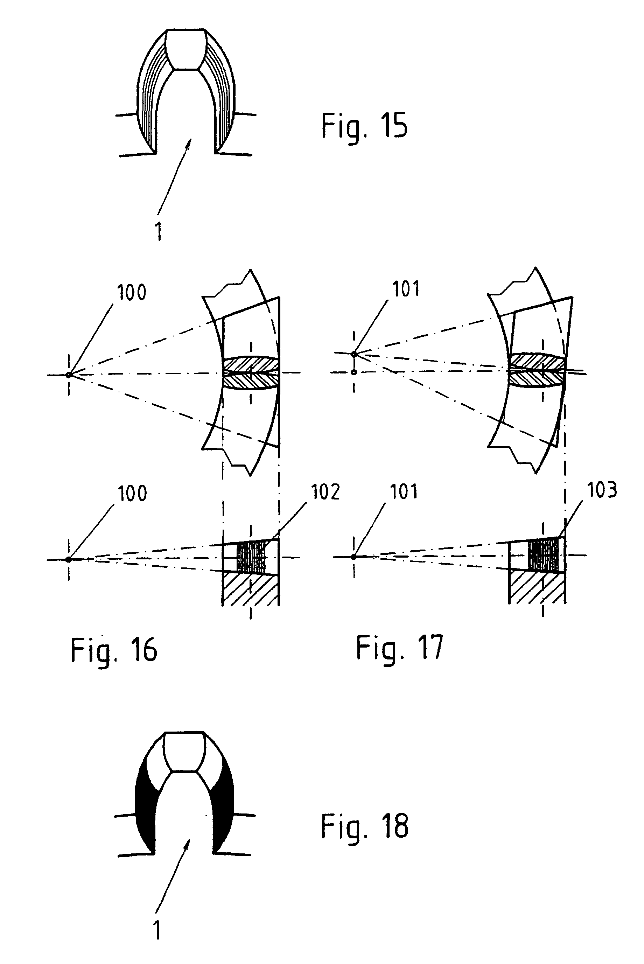

Ein stark übertriebener längsballiger Zahn wird auf der Figur 15 dargestellt. Die Längsballigkeit wird durch eine zusätzliche Drehbewegung der Werkstückachse C bei konstantem Vorschub entlang der Achse Z und X erreicht. Die Lage des Tragbildes kann mittels Fräsprogramm durch entsprechende Steuerung der C-Achse bestimmt werden.

Die Figur 16 zeigt den Eingriff zweier Kegelradzähne, wobei sich die Ritzkegelspitze 100 in der Höhenmitte befindet. Wie man auf dem unteren Teil der Figur sehen kann, befindet sich das Tragbild 102 genau in der Mitte des Zahnes.

Die Figur 17 zeigt die Lage wenn die Ritzkegelspitze 101 aus der Mitte verlagert wurde. Das Tragbild 103 wird auch verlagert, aber dank Breitenballigkeit noch in einem gesicherten Gebiet.

Der Kopfeinzug wird vorzugsweise durch Anpassung des Scheibenfräsers korrigiert, wie man es auf der Figur 18 sehen kann.

Um gute Abrolleigenschaften zu erhalten, werden vorzugsweise die unterschiedlichen Evolventenprofile, die für verschiedene Zähnezahlen notwendig sind, auf der Verzahnungsmaschine korrigiert. Damit können unterschiedliche Teilkegel-Durchmesser pro Getriebestufe berücksichtigt werden.

Der Fachmann wird verstehen, dass durch eine kontinuierliche Drehung der C-Achse und durch eine Verschiebung entlang der Y-Achse während des Fräsvorganges zusätzliche Zahnprofilkorrekturen vorgenommen werden können. Ebenso kann eine Verschiebung des Kegelradfräsers entlang den X- und/oder Z-Achsen zur Herstellung von Sonderkegelrädern, beispielsweise von Rädern mit einem anderen Kegelwinkel als 45°, während dem Fräsvorgang vorgenommen werden.

Mit dem erfindungsgemässen Verfahren können auf derselben Maschine Kegelräder nicht nur gefräst sondern auch nachgeschliffen werden. Zu diesem Zweck kann der Scheibenfräser durch eine Schleifscheibe ersetzt werden.

Nebst den Verdienstmöglichkeiten durch den Einsatz des Verfahrens gibt es auch die Vermarktungsmöglichkeit von Datenträgern mit Softwareprogrammen für dieses Verfahren, welche von Datenverarbeitungsmitteln (beispielsweise von einer Fanuc 16i Steuerung (Warenzeichen)) in einer Fräsmaschine (beispielsweise einer Wälzfräsmaschine des Typs 100 CNC, 7500 CNC oder 9500 CNC) ausgeführt werden können (beispielsweise magnetische und/oder optische Medienträger). Ebenso könnten Werkzeuge, unter anderem modifizierte Scheibenfräser und Schleifscheiben, vermarktet werden.

**Patentansprüche**

1. Verfahren zum Bearbeiten von geradverzahnten Kegelrädern (1) mit einer Eingriffsteilung $\alpha$, wobei mindestens ein Teil der Zahnflanken mit einem Scheibenfräser (2) gefräst wird, wobei die linken Zahnflanken zu einer anderen Zeit als die rechten Zahnflanken gefräst werden, wobei das zu bearbeitende Kegelrad (1) zwischen dem Fräsvorgang von mindestens einer linken Zahnflanke und dem Fräsvorgang von mindestens einer rechten Zahnflanke um einen vordefinierten Winkel ($\Delta$C) gedreht wird. wobei der benannte Winkel ($\Delta$C) kein Vielfaches von $\alpha$ ist, **dadurch gekennzeichnet dass** das Zahnflankenprofil durch eine Winkelverschiebung $\Delta C_k$ des benannten bearbeiteten Kegelrades und/oder durch eine Axialverschiebung $\Delta Y_k$ des benannten Scheibenfräsers korrigiert wird.

2. Verfahren gemäss dem vorhergehenden Anspruch, in welchem $\Delta$C der Hälfte der Eingriffsteilung ($\alpha$) entspricht.

3. Verfahren gemäss einem der vorhergehenden Ansprüche, **dadurch gekennzeichnet, dass** die Neigung der Scheibenfräserachse während dem Fräsvorgang des benannten Kegelrades (1) unverändert bleibt.

4. Verfahren gemäss dem vorhergehenden Anspruch, **dadurch gekennzeichnet, dass** die Scheibenfräserachse während dem Fräsvorgang des benannten Kegelrades (1) senkrecht bleibt.

5. Verfahren gemäss einem der vorhergehenden Ansprüche, **dadurch gekennzeichnet, dass** in einer ersten Phase alle linken Zahnflanken gefräst werden, dass das benannte bearbeitete Kegelrad (1) um den benannten Winkel ($\Delta$C) gedreht wird, und dass alle rechten Zahnflanken in einer zweiten Phase gefräst werden.

6. Verfahren gemäss einem der Ansprüche 1 oder 2, **dadurch gekennzeichnet, dass** in einer ersten Phase alle rechten Zahnflanken gefräst werden, dass das benannte bearbeitete Kegelrad (1) um den benannten Winkel ($\Delta$C) gedreht wird, und dass alle linken Zahnflanken in einer zweiten Phase gefräst werden.

7. Verfahren gemäss einem der Ansprüche 1 oder 2, **dadurch gekennzeichnet, dass** jede Lücke des Kegelrades (1) nacheinander gefräst wird.

8. Verfahren gemäss einem der vorhergehenden Ansprüche, **dadurch gekennzeichnet, dass** der benannte Scheibenfräser (2) zwischen den benannten Fräsvorgängen axial um eine Distanz $\Delta$Y verschoben wird.

9. Verfahren gemäss dem vorhergehenden Anspruch, **dadurch gekennzeichnet, dass** die benannte Distanz $\Delta$Y gleich der Fräserzahnbreite im Teilkreis $m_a$ ist.

10. Verfahren gemäss einem der vorhergehenden Ansprüche, **dadurch gekennzeichnet, dass** das Zahnflankenprofil durch eine Verschiebung $\Delta X_k$ des benannten bearbeiteten Kegelrades korrigiert wird.

11. Verfahren gemäss einem der Ansprüche 1 bis 10, **dadurch gekennzeichnet, dass** die benannten Zähne durch eine zusätzliche Winkelverschiebung der C-Achse des benannten bearbeiteten Kegelrades längsballig bearbeitet werden.

12. Verfahren gemäss einem der Ansprüche 1 bis 11, **dadurch gekennzeichnet, dass** die benannten Zähne durch eine Anpassung des Scheibenfräsers im Zahnkopfbereich korrigiert werden.

13. Verfahren gemäss einem der Ansprüche 1 bis 12, **dadurch gekennzeichnet, dass** das Tragbild der benannten Zähne durch eine zusätzliche Axialverschiebung des Fräsers und eine zusätzliche Drehbewegung des Werkstücks optimiert wird.

14. Computerprogrammprodukt, das direkt in den internen Speicher eines Datenverarbeitungsmittels geladen werden kann und Softwarecodeabschnitte umfasst, mit denen das Verfahren gemäss einem der Ansprüche 1 bis 13 ausgeführt werden, wenn das Produkt auf einer Fräsmaschine läuft.

**Claims**

1. Method for machining straight toothed bevel gears (1) with a base pitch $\alpha$, at least a part of the tooth flanks being milled with a disc milling cutter (2), the left tooth flanks being milled at a different time than the right tooth flanks, the bevel gear (1) to be machined being rotated by a predefined angle ($\Delta$C) between the milling process of at least one left tooth flank and the milling process of at least one right tooth flank, said predefined angle ($\Delta$C) being not a multiple of said base pitch $\alpha$, **characterised in that** the profile of said tooth flanks is corrected through an angular displacement $\Delta C_k$ of said machined bevel gear and/or through an axial displacement $\Delta Y_k$ of said disc milling cutter.

**2.** Method according to the preceding claim, wherein $\Delta C$ corresponds to half of the base pitch ($\alpha$).

**3.** Method according to one of the preceding claims, **characterised in that** the inclination of the axis of the disc milling cutter remains unchanged during the milling process of said bevel gear (1).

**4.** Method according to the preceding claim, **characterised in that** the axis of the disc milling cutter remains vertical during the milling process of said bevel gear (1).

**5.** Method according to one of the preceding claims, **characterised in that** in a first step all the left tooth flanks are milled, that said machined bevel gear (1) is rotated by said predefined angle ($\Delta C$), and that all the right tooth flanks are milled in a second step.

**6.** Method according to one of the claims 1 or 2, **characterised in that** in a first step all the right tooth flanks are milled, that said machined bevel gear (1) is rotated by said angle ($\Delta C$), and that all the left tooth flanks are milled in a second step.

**7.** Method according to one of the claims 1 or 2, **characterised in that** each gap of the bevel gear (1) is milled one after the other.

**8.** Method according to one of the preceding claims, **characterised in that** said disc milling cutter (2) is displaced axially by a distance $\Delta Y$ between said milling processes.

**9.** Method according to the preceding claim, **characterised in that** said distance $\Delta Y$ equals the width of the milling head tooth in the pitch circle $m_a$.

**10.** Method according to one of the preceding claims, **characterised in that** the tooth flank profile is corrected through a displacement $\Delta x_k$ of said machined bevel gear.

**11.** Method according to one of the claims 1 to 10, **characterised in that** said teeth are machined in longitudinal crowning through an additional angular displacement of the C-axis of said machined bevel gear.

**12.** Method according to one of the claims 1 to 11, **characterised in that** said teeth are corrected through an adjustment of the disc milling cutter in the area of the head of said teeth.

**13.** Method according to one of the claims 1 to 12, **characterised in that** the tooth bearing of said teeth is optimised through an additional axial displacement of the milling head and an additional rotational movement of the work piece.

**14.** Computer software product that can be stored directly in the internal storage of a data processing means and comprising software code portions with which the method according to one of the claims 1 to 13 can be executed when the product runs on a milling machine.

**Revendications**

**1.** Procédé d'usinage d'engrenages coniques droits (1) avec un pas $\alpha$,
au moins une partie des flancs des dents étant fraisée avec une fraise à disque (2),
les flancs de dents gauches étant fraisés à un autre moment que les flancs de dents droits,
l'engrenage usiné (1) étant tourné d'un angle ($\Delta C$) entre l'étape de fraisage d'au moins un flanc de dent gauche et l'étape de fraisage d'au moins un flanc de dent droit,
ledit angle ($\Delta C$) n'étant pas un multiple de $\alpha$,
**caractérisé en ce que** le profil de flanc de dent est corrigé au moyen d'un déplacement angulaire $\Delta C_k$ dudit engrenage usiné et/ou d'un déplacement axial $\Delta Y_K$ de ladite fraise à disque.

**2.** Procédé selon la revendication précédente, dans lequel $\Delta C$ correspond à la moitié du pas ($\alpha$).

**3.** Procédé selon l'une des revendications précédentes,
**caractérisé en ce que** l'inclinaison de l'axe de la fraise à disque pendant l'étape de fraisage dudit engrenage conique (1) reste inchangé.

**4.** Procédé selon la revendication précédente, **caractérisé en ce que** l'axe de la fraise à disque reste vertical pendant l'étape de fraisage dudit engrenage conique (1).

**5.** Procédé selon l'une des revendications précédentes,
**caractérisé en ce que** tous les flancs de dents gauches sont fraisés pendant une première phase, **en ce que** ledit engrenage conique (1) est tourné dudit angle ($\Delta C$) et **en ce que** tous les flancs de dents droits sont fraisés pendant une deuxième phase.

**6.** Procédé selon l'une des revendications 1 ou 2, **caractérisé en ce que** tous les flancs de dents droits sont fraisés pendant une première phase, **en ce que** ledit engrenage conique (1) est tourné dudit angle ($\Delta C$) et **en ce que** tous les flancs de dents gauches sont fraisés pendant une deuxième phase.

**7.** Procédé selon l'une des revendications 1 ou 2, **ca-**

**ractérisé en ce que** chaque interstice de l'engrenage conique (1) est fraisé après l'autre.

8. Procédé selon l'une des revendications précédentes, **caractérisé en ce que** ladite fraise à disque (2) est déplacée axialement entre lesdites étapes de fraisage d'une distance $\Delta Y$.

9. Procédé selon l'une des revendications précédentes, **caractérisé en ce que** ladite distance $\Delta Y$ est égale à la largeur de dents de la fraise au niveau du cercle primitif $m_a$.

10. Procédé selon l'une des revendications 1 à 11, **caractérisé en ce que** le profil des flancs de dents est corrigé par déplacement $\Delta X_K$ dudit engrenage conique usiné.

11. Procédé selon l'une des revendications 1 à 10, **caractérisé en ce que** lesdites dents sont usinées en coussinet par déplacement additionnel selon l'axe C dudit engrenage conique usiné.

12. Procédé selon l'une des revendications 1 à 11, **caractérisé en ce que** lesdites dents sont corrigées dans la région de la tête de dents par adaptation de la fraise à disque.

13. Procédé selon l'une des revendications 1 à 12, **caractérisé en ce que** la portée de ladite dent est optimisée par un déplacement axial supplémentaire de la fraise et par une rotation supplémentaire de la pièce.

14. Produit informatique pouvant être chargé directement dans la mémoire interne de moyens de traitement de données et comprenant des portions de code logiciel avec lesquels le procédé de l'une des revendications 1 à 14 peut être mis en oeuvre lorsque le produit est exécuté sur une machine à fraiser.

Fig. 1

Fig. 2

Fig. 3

Fig. 4

Fig. 5

Fig. 6

Fig. 7

Fig. 8

Fig. 9

Fig. 10

Fig. 11

Fig. 12

$$\triangle yk = y1 - y2$$

$$y1 = \sin\frac{\alpha}{4} * \frac{do}{2}$$

$$y2 = \sin\left(\frac{\alpha}{4} - \triangle Ck\right) * \frac{do}{2}$$

Fig. 13

EP 1 233 840 B1

$$c = \frac{df/2}{\cos \alpha}$$

$$c1 = c - df/2$$

$$c1 = \frac{df/2}{\cos \alpha} - df/2$$

$$df/2 - \triangle xk = \cos \alpha * df/2$$

$$\underline{\triangle xk = df/2 - \cos \alpha * df/2}$$

# Fig. 14

Fig. 15

Fig. 16

Fig. 17

Fig. 18